# EUROPEAN PATENT APPLICATION

(11) **EP 4 509 562 A1**
(43) Date of publication of application: **19.02.2025**
(21) Application number: 23807317.5
(22) Date of filing: 04.04.2023
(51) Int. Cl.: C08L 67/00, C08L 101/16

(54) **COMPOSITION**

(30) Priority: 16.05.2022 JP 2022080259
(71) Applicant: Sumitomo Chemical Company, Limited, Tokyo 103-6020 (JP); Newlight Technologies, Inc., Huntington Beach CA 92647 (US)
(72) Inventor: CHIBA, Shunsuke, Ichihara-shi, Chiba 299-0195 (JP)
(74) Representative: Vossius & Partner Patentanwälte Rechtsanwälte mbB
(86) International application number: PCT/JP2023/013993
(87) International publication number: WO 2023/223702

(57) **Abstract**

A composition I contains a polymer B and a compound C. The polymer B is an aliphatic polyester-based polymer. A content of the compound C is 0.01 to 20 parts by mass with respect to 100 parts by mass of a total of the polymer B and the compound C. The compound C satisfies the following requirement 1:
requirement 1: when a melt mass flow rate of the polymer B as measured under conditions of a temperature of 210°C and a load of 2.16 kgf is designated as MFR (B), and
a melt mass flow rate of a mixture X containing 0.5 parts by mass of the compound C with respect to 100 parts by mass of the total of the polymer B and the compound C as measured under conditions of a temperature of 210°C and a load of 2.16 kgf is designated as MFR (X), MFR (X)/MFR (B) is 2.0 or less.

## Description

### Technical Field

The present invention relates to a composition.

### Background Art

An aliphatic polyester-based polymer is a resin that can be synthesized by renewable resources without using fossil resources and has low environmental load, and is a resin excellent in molding processability and mechanical properties. For this reason, hitherto, by adding the aliphatic polyester-based polymer to various packaging materials, various containers such as bottles, food packaging materials, container caps, stationery, daily goods, fibers for carpets and sofas, interior and exterior materials for automobiles, electrical and electronic components, building materials such as interior materials for buildings and houses, and the like, the environmental load can be reduced. In recent years, improvements in deterioration of mechanical properties due to deterioration of the aliphatic polyester-based polymer by heating and light are often required for these articles.

Therefore, as a means for responding to these requirements, as described in Patent Literature 1, there is considered a method in which a known stabilizer mixture such as a phenolic antioxidant, phosphonite or phosphite, and a thiosynergist is blended with an aliphatic polyester-based polymer.

### Citation List

### Patent Literature

Patent Literature 1: Japanese Unexamined Patent Publication No. 2011-526317

### Summary of Invention

### Technical Problem

However, a decrease in molecular weight of the aliphatic polyester-based polymer due to heating may be further promoted by a known stabilizer such as a phenolic antioxidant, phosphonite or phosphite, and a thiosynergist. Therefore, even when a composition in which a known stabilizer such as a phenolic antioxidant, phosphonite or phosphite, and a thiosynergist is blended with an aliphatic polyester is introduced into a cavity of a specific mold and the mold is cooled to solidify the composition, there is a problem in that mechanical properties such as an elastic modulus are deteriorated due to a decrease in molecular weight of the aliphatic polyester-based polymer.

The present invention has been made in view of the above problems, and an object thereof is to provide a composition excellent in mechanical properties such as an elastic modulus while containing an aliphatic polyester-based polymer.

### Solution to Problem

[1] A composition containing:
   a polymer B; and
   a compound C, in which
   the polymer B is an aliphatic polyester-based polymer,
   a content of the compound C is 0.01 to 20 parts by mass with respect to 100 parts by mass of a total of the polymer B and the compound C, and
   the compound C satisfies the following requirement 1:
      requirement 1: when a melt mass flow rate of the polymer B as measured under conditions of a temperature of 210°C and a load of 2.16 kgf is designated as MFR (B), and
      a melt mass flow rate of a mixture X containing 0.5 parts by mass of the compound C with respect to 100 parts by mass of the total of the polymer B and the compound C as measured under conditions of a temperature of 210°C and a load of 2.16 kgf is designated as MFR (X), MFR (X)/MFR (B) is 2.0 or less.
[2] The composition described in [1], in which MFR (X)/MFR (B) in the requirement 1 is 0.8 or less.
[3] The composition described in [1] or [2], in which the compound C is selected from compounds represented by formula (C1):

   Ph¹-X-(Ph²)ₐ ... (C1)

   provided that, a is 1 or 2, and Ph¹ is represented by formula (C2), 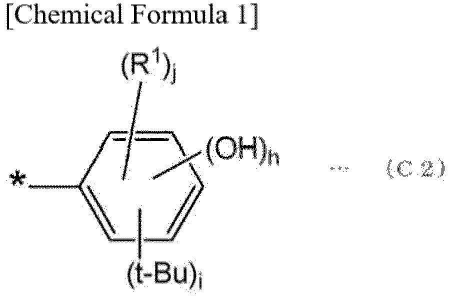
   where R¹ is independently selected from the group consisting of an alkyl group having 1 to 5 carbon atoms except a t-Bu group, h is an integer of 1 to 3, i is an integer of 1 to 3, j is an integer of 0 to 3, h + i + j is 5 or less, one or more t-Bu groups are necessarily present at an ortho position of at least one OH group,
   Ph² is represented by formula (C3), 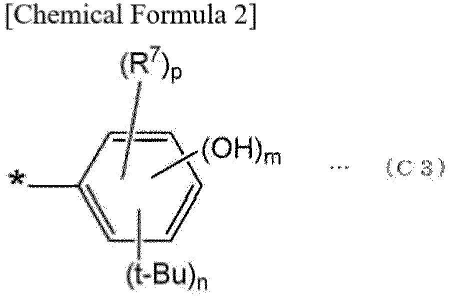
   where m is an integer of 0 to 3, n is an integer of 0 to 3, p is an integer of 0 to 3, m + n + p is 5 or less, R⁷ is independently selected from the group consisting of an alkyl group having 1 to 5 carbon atoms except a t-Bu group,
   X is selected from the group consisting of -O-C(=O)-, -(O=)C-O-, -C(R⁸)₂-, -S-, -O-, a divalent or trivalent aromatic hydrocarbon group in which the number of carbons constituting a ring is 6 to 14, and 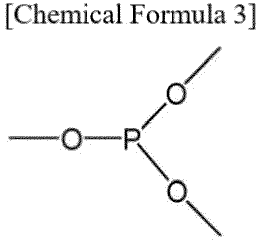
   where R⁸ is independently selected from the group consisting of a hydrogen atom and an alkyl group having 1 to 5 carbon atoms, and
   * in the structural formula represents a bond.
[4] The composition described in any one of [1] to [3], containing:
   a first compound C having MFR (X)/MFR (B) of 0.8 or less; and
   a second compound C having MFR (X)/MFR (B) of more than 0.8 and 1.0 or less.
[5] The composition described in any one of [1] to [4], in which the polymer B accounts for more than 50 mass%.
[6] The composition described in any one of [1] to [5], in which the polymer B is a poly(3-hydroxyalkanoate)-based polymer having a melting point of 150°C or higher.
[7] The composition described in any one of [1] to [6], in which a molecular weight of the compound C is 5000 or less.
[8] A composition containing:
   a polyolefin-based polymer A;
   a polymer B; and
   a compound C, in which
   the polymer B is an aliphatic polyester-based polymer,
   a content of the compound C is 0.01 to 20 parts by mass with respect to 100 parts by mass of a total of the polymer A, the polymer B, and the compound C, and
   the compound C satisfies the following requirement 1:
      requirement 1: when a melt mass flow rate of the polymer B as measured under conditions of a temperature of 210°C and a load of 2.16 kgf is designated as MFR (B), and
      a melt mass flow rate of a mixture X containing 0.5 parts by mass of the compound C with respect to 100 parts by mass of the total of the polymer B and the compound C as measured under conditions of a temperature of 210°C and a load of 2.16 kgf is designated as MFR (X), MFR (X)/MFR (B) is 2.0 or less.
[9] The composition described in [8], in which MFR (X)/MFR (B) in the requirement 1 is 0.8 or less.
[10] The composition described in [8] or [9], in which the compound C is selected from compounds represented by formula (C1):

   Ph¹-X-(Ph²)ₐ ... (C1)

   provided that, a is 1 or 2, and Ph¹ is represented by formula (C2), 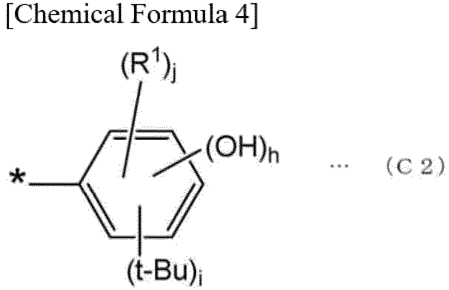
   where R¹ is independently selected from the group consisting of an alkyl group having 1 to 5 carbon atoms except a t-Bu group, h is an integer of 1 to 3, i is an integer of 1 to 3, j is an integer of 0 to 3, h + i + j is 5 or less, one or more t-Bu groups are necessarily present at an ortho position of at least one OH group,
   Ph² is represented by formula (C3), 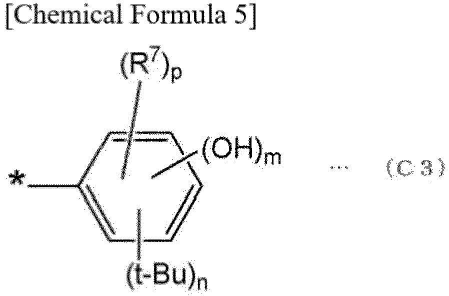
   where m is an integer of 0 to 3, n is an integer of 0 to 3, p is an integer of 0 to 3, m + n + p is 5 or less, R⁷ is independently selected from the group consisting of an alkyl group having 1 to 5 carbon atoms except a t-Bu group,
   X is selected from the group consisting of -O-C(=O)-, -(O=)C-O-, -C(R⁸)₂-, -S-, -O-, a divalent or trivalent aromatic hydrocarbon group in which the number of carbons constituting a ring is 6 to 14, and 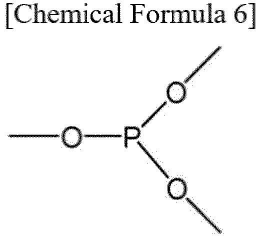
   where R⁸ is independently selected from the group consisting of a hydrogen atom and an alkyl group having 1 to 5 carbon atoms, and
   * in the structural formula represents a bond.
[11] The composition described in any one of [8] to [10], containing:
   a first compound C having MFR (X)/MFR (B) of 0.8 or less; and
   a second compound C having MFR (X)/MFR (B) of more than 0.8 and 1.0 or less.
[12] The composition described in any one of [8] to [11], in which when a total of the polyolefin-based polymer A and the polymer B is taken as 100 parts by mass, the composition contains more than 50 parts by mass of the olefin-based polymer A.
[13] The composition described in any one of [8] to [12], in which the polymer B is a poly(3-hydroxyalkanoate)-based polymer having a melting point of 150°C or higher.
[14] The composition described in any one of [8] to [13], in which a molecular weight of the compound C is 5000 or less.

### Advantageous Effects of Invention

According to the present invention, there is provided a composition excellent in mechanical properties while containing an aliphatic polyester-based polymer.

### Description of Embodiments

Hereinafter, some embodiments of the present invention will be described in detail. However, the present invention is not limited to the following embodiments.

### (Composition I)

A composition I according to an embodiment contains a polymer B and a compound C, and may contain an olefin-based polymer A.

### <Polymer B>

The polymer B is an aliphatic polyester-based polymer.

The aliphatic polyester-based polymer has a structure of a polycondensate of an aliphatic polyvalent carboxylic acid component and an aliphatic polyhydric alcohol component or a polycondensate of an aliphatic hydroxycarboxylic acid, and the main chain of the repeating unit does not contain an aromatic hydrocarbon structure.

Examples of the aliphatic polyester-based polymer include a polymer of a hydroxycarboxylic acid or a lactone, a polycondensate of a diol and a dicarboxylic acid, and a copolymer thereof. When the polymer B is a copolymer, the form of arrangement of the copolymer may be any form of a random copolymer, an alternating copolymer, a block copolymer, a graft copolymer, and the like.

Furthermore, those may be one in which at least a part thereof is crosslinked with a crosslinking agent such as a polyvalent isocyanate, such as xylylene diisocyanate or 2,4-tolylene diisocyanate, or a polysaccharide, such as cellulose, acetyl cellulose, or ethyl cellulose. Further, those may be one in which at least a part thereof may have any structure of linear, cyclic, branched, star, three-dimensional network- structures, and the like, there is no any limitation, and those may be a copolymer with a polyolefin-based resin or a graft polymer with a polyolefin-based resin.

Furthermore, this polymer B can be used singly or in combination.

Examples of the hydroxycarboxylic acid include a hydroxycarboxylic acid having 2 to 18 carbon atoms, a hydroxycarboxylic acid having 6 or less carbon atoms is preferable, and a hydroxycarboxylic acid having 4 carbon atoms is most preferable. Specific examples thereof include glycolic acid, L-lactic acid, D-lactic acid, D,L-lactic acid, 3-hydroxybutyrate, 3-hydroxyvalerate, 3-hydroxypropionate, 4-hydroxybutyrate, 4-hydroxyvalerate, 5-hydroxyvalerate, 3-hydroxypentenoate, 3-hydroxyhexanoate, 3-hydroxyheptanoate, 3-hydroxyoctanoate, 3-hydroxynonanoate, and 3-hydroxydecanoate.

Examples of the lactone include propiolactone, butyrolactone, valerolactone, caprolactone, and laurolactone.

The diol is preferably a diol having 2 to 10 carbon atoms. In particular, an aliphatic diol having 2 to 4 carbon atoms or an alicyclic diol having 5 to 6 carbon atoms is more preferable. Specific examples thereof include ethylene glycol, 1,3-propanediol, 1,4-butanediol, 1,2-butanediol, 1,5-pentanediol, 1,6-hexanediol, 1,8-octanediol, 1,10-decanediol, 1,12-dodecanediol, 1,14-tetradecanediol, 1,16-hexadecanediol, 1,18-octadecanediol, 1,2-cyclohexanediol, 1,4-cyclohexanediol, 1,2-cyclohexanedimethylol, and 1,4-cyclohexanedimethylol.

The dicarboxylic acid is preferably an aliphatic dicarboxylic acid having 2 to 12 carbon atoms. In particular, an aliphatic dicarboxylic acid having 2 to 6 carbon atoms or an alicyclic dicarboxylic acid having 5 to 6 carbon atoms is more preferable. Specific examples thereof include oxalic acid, malonic acid, succinic acid, glutaric acid, adipic acid, pimelic acid, suberic acid, azelaic acid, sebacic acid, undecadicarboxylic acid, dodecadicarboxylic acid, 1,14-tetradecanedicarboxylic acid, 1,16-hexadecanedicarboxylic acid, 1,18-octadecanedicarboxylic acid, a dimer acid and a hydrogenated product thereof, hexahydrophthalic acid, hexahydroisophthalic acid, and hexahydroterephthalic acid. Furthermore, these dicarboxylic acids may be derivatives such as an alkyl ester having 1 to 4 carbon atoms and an acid anhydride.

Among the aliphatic polyester-based polymers, it is preferable to use polylactic acid or polybutylene succinate, poly(butylene succinate-co-butylene adipate), polycaprolactone, poly(3-hydroxybutyrate), poly(3-hydroxybutyrate-co-3-hydroxyhexanoate), and polyglycolic acid.

When polylactic acid is used as the polymer B, the polylactic acid is preferably one in which the proportion of the L-form in the lactic acid component constituting the polylactic acid is preferably 94 mol% or more. By setting the proportion of the L-form in such a range, it is possible to prevent a decrease in melting point.

### (Poly(3-hydroxyalkanoate)-based polymer)

The polymer B can be a poly(3-hydroxyalkanoate)-based polymer having a melting point of 150°C or higher.

The poly(3-hydroxyalkanoate)-based polymer is a polyhydroxyalkanoate, that is, a polycondensate (polyester) of a hydroxyalkanoic acid, and necessarily contains a repeating unit of a 3-hydroxyalkanate represented by formula (1). In formula (1), R is a hydrogen atom, a halogen atom, an alkyl group having 1 to 15 carbon atoms, a cyano group, an amino group having 1 to 18 carbon atoms, an alkoxy group (alkyloxy group) having 1 to 11 carbon atoms, an amide group having 1 to 20 carbon atoms, an aryl group having 6 to 12 carbon atoms, or a monovalent heterocyclic group having 1 to 9 carbon atoms. These groups may have a substituent. In particular, from the viewpoint of compatibility with a component (for example, the polymer A) except the polymer B contained in the composition, R is preferably an alkyl group having 1 to 8 carbon atoms, an amide group having 1 to 20 carbon atoms, or an aryl group having 6 to 8 carbon atoms.

[-O-CHR-CH₂-CO-] ... (1)

Examples of the halogen atom include F, Cl, Br, and I.

The alkyl group having 1 to 15 carbon atoms may be linear or branched. The number of carbon atoms of the alkyl group is preferably 1 to 8 and more preferably 1 to 4. Examples of the alkyl group include a methyl group, an ethyl group, a propyl group, an isopropyl group, a butyl group, an isobutyl group, a sec-butyl group, a tert-butyl group, a pentyl group, an isopentyl group, a 2-methylbutyl group, a 1-methylbutyl group, a hexyl group, an isohexyl group, a 3-methylpentyl group, a 2-methylpentyl group, a 1-methylpentyl group, a heptyl group, an octyl group, an isooctyl group, a 2-ethylhexyl group, a 3,7-dimethyloctyl group, a nonyl group, a decyl group, an undecyl group, a dodecyl group, a tetradecyl group, and a pentadecyl group.

Examples of the amino group having 1 to 18 carbon atoms include an amino group, an alkylamino group, a dialkylamino group, an arylamino group, an alkylarylamino group, a benzylamino group, and a dibenzylamino group.

Examples of the alkylamino group include a methylamino group, an ethylamino group, a propylamino group, a butylamino group, a pentylamino group, a hexylamino group, a heptylamino group, an octylamino group, a nonylamino group, a decylamino group, a dodecylamino group, an isopropylamino group, an isobutylamino group, an isopentylamino group, a sec-butylamino group, a tert-butylamino group, a sec-pentylamino group, a tert-pentylamino group, a tertoctylamino group, a neopentylamino group, a cyclopropylamino group, a cyclobutylamino group, a cyclopentylamino group, a cyclohexylamino group, a cycloheptylamino group, a cyclooctylamino group, a 1-adamantamino group, and 2-adamaiitaiiiino group.

Examples of the dialkylamino group include a dimethylamino group, a diethylamino group, a dipropylamino group, a dibutylamino group, a dipentylamino group, a diisopropylamino group, a diisobutylamino group, a diisopentylamino group, a methylethylamino group, a methylpropylamino group, a methylbutylamino group, a methylisobutylamino group, a dicyclopropylamino group, a pyrrolidino group, a piperidino group, and a piperazino group.

Examples of the arylamino group include an anilino group, a 1-naphthylamino group, a 2-naphthylamino group, an o-toluidino group, a m-toluidino group, a p-toluidino group, a 1-fluoreneamino group, a 2-fluoreneamino group, a 2-thiazoleamino group, and a p-terphenylamino group.

Examples of the alkylarylamino group include an N-methylanilino group, an N-ethylanilino group, an N-propylanilino group, an N-butylanilino group, an N-isopropylanilino group, and an N-pentylanilino group.

Examples of the alkoxy group having 1 to 11 carbon atoms include a methoxy group, an ethoxy group, a propoxy group, an isopropoxy group, a butoxy group, an isobutoxy group, a sec-butoxy group, a tert-butoxy group, a cyclopropoxy group, a cyclobutoxy group, and a cyclopentoxy group.

The "amide group" means a group obtained by removing one hydrogen atom bonded to a nitrogen atom from a carboxylic amide. Examples of the amide group having 1 to 20 carbon atoms include a group represented by -NH-C(=O)-R^{A} (provided that, R^{A} is a hydrogen atom or a monovalent organic group) such as a formamide group, an acetamide group, a propionamide group, a butyramide group, a benzamide group, a trifluoroacetamide group, or a pentafluorobenzamide group, and a group represented by -N(-C(=O)-R^{A})(-C(=O)-R^{B}) (provided that, R^{A} and R^{B} are each independently a hydrogen atom or a monovalent organic group) such as a diformamide group, a diacetamide group, a dipropioamide group, a dibutyroamide group, a dibenzamide group, a ditrifluoroacetamide group, or a dipentafluorobenzamide group. The organic group can be an alkyl group, an alkoxy group, or an aryl group, which may be substituted with a halogen atom. Among them, the amide group is preferably a formamide group, an acetamide group, a propionamide group, a butyroanride group, or a benzamide group.

Examples of the aryl group having 6 to 12 carbon atoms include a phenyl group, a tolyl group, a xylyl group, a naphthyl group, and a biphenyl group, and among them, a phenyl group, a tolyl group, and a xylyl group are more preferable.

Examples of the heteroatom of the monovalent heterocyclic group having 1 to 9 carbon atoms include N, O, and S, may be saturated or unsaturated, may have a single heteroatom or a plurality of heteroatoms, and may have different types of heteroatoms. Examples of such a heterocyclic group include a thienyl group, a pyrrolyl group, a furyl group, a pyridyl group, a piperidinyl group, a quinolinyl group, an isoquinolinyl group, a pyrimidinyl group, a triazinyl group, and a thiazolyl group.

The repeating unit of the polymer B may consist only of one or more kinds of 3-hydroxyalkanoate represented by formula (1), and may have one or more kinds of 3-hydroxyalkanoate represented by formula (1) and one or more kinds of other hydroxyalkanoates.

The polymer B preferably contains 50 mol% or more, and more preferably 70 mol% or more, of the repeating unit of 3-hydroxyalkanoate represented by formula (1) with respect to the total repeating unit (100 mol%) of the hydroxyalkanoate.

Examples of the 3-hydroxyalkanoate represented by formula (1) include, when R is a hydrogen atom or an alkyl group represented by CₙH₂ₙ₊₁ and n is an integer of 1 to 15, 3-hydroxybutyrate with n = 1 (hereinafter, sometimes referred to as 3HB), 3-hydroxyvalerate with n = 2 (hereinafter, sometimes referred to as 3HV), 3-hydroxyhexanoate with n = 3 (hereinafter, sometimes referred to as 3HH), 3-hydroxyoctanoate with n = 5, 3-hydroxyoctadecanoate with n = 15, and 3-hydroxypropionate in which R is a hydrogen atom.

Examples of the polymer B having only one repeating unit represented by formula (1) include poly(3-hydroxybutyrate) (hereinafter, sometimes referred to as P3HB).

Examples of the polymer B having only a plurality of repeating units represented by formula (1) include poly(3-hydroxybutyrate-co-3-hydroxyhexanoate) (hereinafter, sometimes referred to as P3HB3HH), poly(3-hydroxybutyrate-co-3-hydroxyvalerate) (hereinafter, sometimes referred to as P3HB3HV), and poly(3-hydroxybutyrate-co-3-hydroxypropionate (hereinafter, sometimes referred to as P3HB3HP).

Examples of the other hydroxyalkanoates except the 3-hydroxyalkanoate represented by formula (1) include a repeating unit represented by formula (2) (wherein R¹ is a hydrogen atom or an alkyl group represented by CₙH₂ₙ₊₁, n is an integer of 1 or more and 15 or less, and m is an integer of 2 to 10).

[-O-CHR¹-CₘH₂ₘ₊₁-CO-] ... (2)

Examples of the polymer B containing repeating units of formula (1) and formula (2) include poly(3-hydroxybutyrate-co-4-hydroxybutyrate) (for example, the following formula (P3HB4HB)).

From the viewpoint of increasing the melting point, it is preferable that the repeating unit of the polymer B contains at least 3-hydroxybutyrate among 3-hydroxyalkanoate represented by formula (1).

The polymer B preferably contains 50 mol% or more, and more preferably 70 mol% or more, of the repeating unit of 3-hydroxybutyrate with respect to the total repeating unit (100 mol%) of the hydroxyalkanoate.

The polymer B may have two or more repeating units of ester, and may be, for example, a di-polymer having two repeating units as described above, a tri-copolymer having three repeating units, and a tetra-copolymer having four repeating units.

Examples of the tri-copolymer include poly(3-hydroxybutyrateco-3-hydroxyvalylate-co-3-hydroxyhexanoate) (hereinafter, sometimes referred to as (P3HB3HV3HH)).

As described above, the polymer B preferably contains 3-hydroxybutyrate among the repeating unit of the 3-hydroxyalkanoate represented by formula (1). A ratio XX of the repeating unit of 3-hydroxybutyrate to 100 mol of the ester repeating unit of the total hydroxyalkanoate is preferably 90 mol% or more, more preferably 95 mol% or more, and still more preferably 98.0 mol% or more.

The ratio XX is usually 100 mol% or less, preferably 99.9 mol% or less, and preferably 99.8 mol% or less.

The form of arrangement of the copolymer may be any form of a random copolymer, an alternating copolymer, a block copolymer, a graft copolymer, and the like.

The polymer B may have other ester repeating units except those of formula (1) and formula (2), but the main chain of the other ester repeating units does not contain an aromatic hydrocarbon structure. That is, the polymer B is an aliphatic polyester. However, it is possible that a group having an aromatic hydrocarbon group is bonded to carbon in the main chain of the other ester repeating unit.

As described in L. Tripathi., M. C. Factories, 11, 44 (2012), the composition ratio of the repeating unit in the polymer B can be determined by calculation from the results of NMR measurement such as 1H-NMR and 13C-NMR.

Furthermore, the polymer B may be a mixture of two or more polymers of a poly(3-hydroxyalkanoate)-based polymer.

The weight average molecular weight (Mw) of the polymer B can be 10000 to 1000000, and is preferably 20000 to 800000 and more preferably 30000 to 600000. When the weight average molecular weight (Mw) is 10000 or more, a molded article excellent in impact strength and tensile elongation can be obtained. Furthermore, when the weight average molecular weight is 500000 or less, the dispersibility in the olefin-based polymer A is improved. The weight average molecular weight may be 400000 or less, 300000 or less, 200000 or less, or 100000 or less. Note that, in the present specification, the weight average molecular weight (Mw) is measured by GPC using standard polystyrene as a molecular weight standard substance.

The polymer B is a thermoplastic resin, and is suitably crystalline.

The melt mass flow rate (MFR (B)) of the polymer B as measured according to JIS K7210-2014 under conditions of a temperature of 190°C or 170°C and a load of 2.16 kgf is preferably 0.1 g/10 min or more and 200 g/10 min or less. The MFR (B) may be 1 g/10 min or more, 3 g/10 min or more, 5 g/10 min or more, 7 g/10 min or more, 8 g/10 min or more, 10 g/10 min or more, or 20 g/10 min or more. The MFR (B) may be 150 g/10 min or less or 100 g/10 min or less.

The melting point (Tm) of the polymer B is 150°C or higher, and may be 155°C or higher, 160°C or higher, 165°C or higher, 170°C or higher, or 175°C or higher. The melting point (Tm) of the polymer B can be 220°C or lower, and may be 200°C or lower or 190°C or lower.

The melting point (Tm) of the polymer B is measured by the position of a main peak based on melting of a crystal obtained by differential scanning calorimetry (DSC) measurement in accordance with JIS K7121.

The poly(3-hydroxyalkanoate)-based polymer may be produced by microorganisms, and may be derived from a compound (such as a cyclic lactone) derived from a petroleum or plant source.

In the poly(3-hydroxyalkanoate)-based polymer, each repeating unit of the hydroxyalkanate may consist of only the D-form (R-form) as in the case of a polymer produced from a microorganism, or the repeating unit of the hydroxyalkanoate may include both the D-form (R-form) and the L-form (S-form) as in the case of a polymer derived from a mixture of the D-form (R-form) and the L-form (S-form).

In a poly(3-hydroxyalkanoate)-based polymer produced from a microorganism, the repeating unit of formula (1) can be expressed as in the following formula. In formula (BI-1), n represents the degree of polymerization.

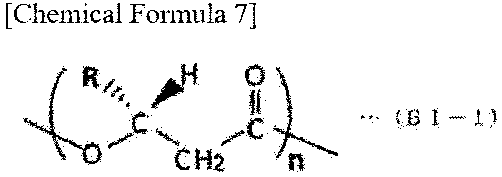

Further, for example, poly-(3-hydroxybutyrate) produced from a microorganism has the structure as described below. In formula (BI-2), n represents the degree of polymerization.

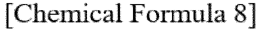

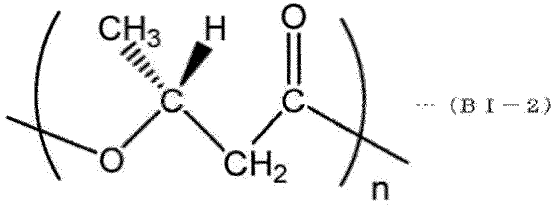

Furthermore, poly-(3-hydroxybutyrate-co-3-hydroxyhexanoate) produced from a microorganism has the structure as described below. In formula (BI-3), m and n represent the degree of polymerization.

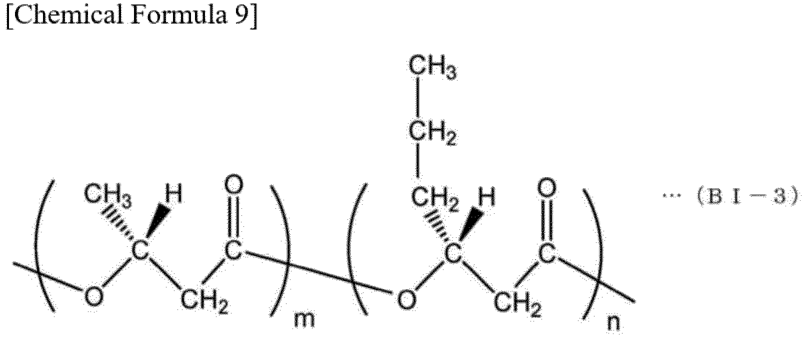

Furthermore, poly-(3-hydroxybutyrate-co-4-hydroxybutyrate) produced from a microorganism has the structure as described below. In formula (BI-4), m and n represent the degree of polymerization.

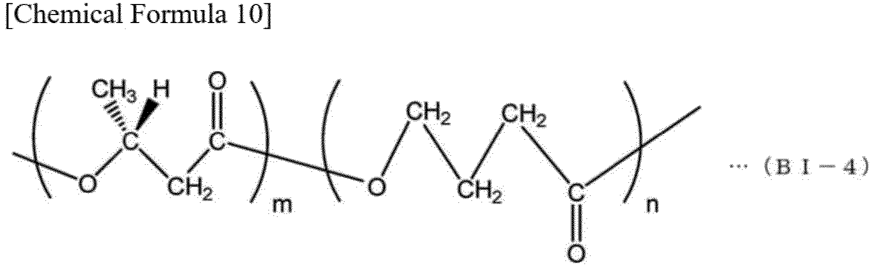

The polymer B can be biodegradable.

For example, the poly(3-hydroxyalkanoate)-based polymer can be produced by microorganisms such as Alcaligeneseutrophus AC32 strain in which PHA synthase enzyme gene derived from Aeromonascaviae was introduced into Alcaligenes eutrophus (international deposit under the Budapest Treaty, international depositary authority: National Institute of Advanced Industrial Science and Technology Center (Center 6, 1-1-1 Higashi, Tsukuba City, Ibaraki Prefecture, Japan), original deposit date: August 12, 1996, transferred on August 7, 1997, accession number FERMBP-6038 (transferred from original deposit FERMP-15786)) (J. Bacteriol., 179, 4821 (1997)).

### (Compound C)

The compound C satisfies the following requirement 1:
requirement 1: when a melt mass flow rate of the polymer B as measured under conditions of a temperature of 210°C and a load of 2.16 kgf is designated as MFR (B), and
a melt mass flow rate of a mixture X containing 0.5 parts by mass of the compound C with respect to 100 parts by mass of the total of the polymer B and the compound C as measured under conditions of a temperature of 210°C and a load of 2.16 kgf is designated as MFR (X), MFR (X)/MFR (B) is 2.0 or less.

MFR (X)/MFR (B) may be 1.5 or less, 1.0 or less, 0.9 or less, or 0.8 or less.

MFR (X)/MFR (B) is a value determined for each type of the compound C. Furthermore, MFR (X)/MFR (B) can be changed depending on the polymer B in addition to the type of the compound C.

The MFR (X) and the MFR (B) are melt mass flow rates as measured in a cylinder that blocks any light. The residence time in the cylinder can be 5 minutes.

The compound C may be a single compound having MFR (X)/MFR (B) of 2.0 or less, and may be a mixture of two or more kinds of compounds having MFR (X)/MFR (B) of 2.0 or less.

When the polymer B is deteriorated by the addition of the compound C, the MFR (X) is larger than the MFR (B). When the deterioration of the polymer B is suppressed by the addition of the compound C, the MFR (X) is smaller than the MFR (B). That is, the phrase "MFR (X)/MFR (B) is 2.0 or less" means that the compound C is a compound that hardly causes significant deterioration of the aliphatic polyester-based polymer B due to heating.

Furthermore, the phrase "MFR (X)/MFR (B) is 0.8 or less" means that the compound C is a compound that can sufficiently suppress deterioration of the aliphatic polyester-based polymer B due to heating.

The molecular weight of each compound C is not particularly limited, and is preferably 5000 or less.

The compound C is not particularly limited as long as it is a compound satisfying the above MFR (X)/MFR (B), and may be preferably an aromatic compound or an aliphatic compound. The compound C is, for example, selected from one or more aromatic compounds, one or more aliphatic compounds, and a combination of one or more aromatic compounds and one or more aliphatic compounds.

### (Aromatic Compound)

Examples of the aromatic compound include an unsubstituted compound, a mono-substituted compound, a di-substituted compound, and a tri- or more substituted polysubstituted compound, examples of the mono-substituted compound and the di-substituted compound include an alkylbenzene-based compound, an isoalkylbenzene-based compound, a phenol-based compound, a benzyl alcohol-based compound, an anisolebased compound, a carbonylbenzene-based compound, an aniline-based compound, a benzotriazole-based compound, a nitrobenzene-based compound, a styrene-based compound, a salicylic acid-based compound, and a toluidine-based compound, examples of the aromatic polycyclic compound include a biphenyl-based compound, a benzophenone-based compound, a triphenylmethane-based compound, and a phenolphthaleinbased compound, and these mono-substituted compound, di-substituted compound, and tri- or more substituted polysubstituted compound may form a polycyclic or condensed ring structure.

### Examples of the aromatic compound are shown below.

### <Alkylbenzene-Based Compound and Isoalkylbenzene-Based Compound>

### toluene, o-xylene, m-xylene, p-xylene, ethylbenzene, cumene, and p-cymene.

### <Phenol-Based Compound>

phenol, dibutylhydroxytoluene, bisphenol A, o-cresol, m-cresol, p-cresol, estradiol, eugenol, trihydroxybenzene, methoxyphenol, trinitrophenol, phenolphthalein, 5-hydroxytryptaniiiie, 4-(2-aminoethyl)benzene-1,2-diol, 4-[1-hydroxy-2-(methylamino)ethyl]benzene-1,2-diol, a 2-isopropyl-5-inethylphenolbased compound, 4-hydroxyphenylalanine, diethylstilbestrol, L-3,4-dihydroxyphenylalanine, methyl 2-hydroxybenzoate, a propofol-based compound, and a salicylic acid-based compound.

### <Phenolic Antioxidant>

1,3,5-tris(3,5-di-tertbutyl-4-hydroxybenzyl)-1,3,5-triazine-2,4,6(1H,3H,5H)-trione (ADK STAB AO-20),
4,4',4",-(1-methylpropanyl-3-ylidene)tris(6-tertbutyl-m-cresol) (ADK STAB AO-30),
6,6'-di-tertbutyl-4,4'-butylidenedi-m-cresol (AO-40) (C101),
pentaerythritol tetrakis[3-(3,5-di-tertbutyl-4-hydroxyphenyl)propionate] (ADK STAB AO-60) (Irganox 1010),
3,9-bis[2-[3-(3-tertbutyl-4-hydroxy-5-methylphenyl)propionyloxy]-1,1-dimethylethyl]-2,4,8,10-tetraoxaspiro[5.5]undecane (ADK STAB AO-80),
2,4,6-tris(3',5'-di-tertbutyl-4'-hydroxybenzyl)mesitylene (C103) (ADK STAB AO-80),
2,2'-methylenebis[6-(2H-benzotriazole-2-yl)-4-(1,1,3,3-tetramethylbutyl)phenol] (ADK STAB LA-31RG),
2-(4,6-diphenyl-1,3,5-triazine-2-yl)-5-(hexyloxy)phenol (ADK STAB LA-46),
6,6',6"-(1,3,5-triazine-2,4,6-triyl)tris(3-hexyloxy-2-methylphenol),
2,2'-methylenebis(6-cyclohexyl-p-cresol),
N,N'-(hexane-1,6-diyl)bis[3-(3,5-di-tert-butyl-4-hydroxyphenyl)propanamide),
2,4,6-tris(3',5'-di-tert-butyl-4'-hydroxybenzyl)mesitylene,
2,2' ,6,6' -tetra-tert-butyl-4,4' -dihydroxybiphenyl, galvinoxyl free radical,
bis[3-(3,5-di-tert-butyl-4-hydroxyphenyl)propanoate][oxalylbis(azanediyl)]bis(ethane-2,1-diyl),
4-(hexyloxy)-2,3,6-trimethylphenol,
2-methyl-4,6-bis[(n-octylthio)methyl]phenol,
2,5-di-tert-amylhydroquinone, 2,4-bis[(dodecylthio)methyl]-6-methylphenol,
6-tert-butyl-2,4-xylenol,
3,6-dihydroxybenzonorbomane,
2,6-di-tert-buty1-4-methoxyphenol,2,6-di-tert-butylphenol,3,5-di-tert-butyl-4-hydroxybenzoate hexadecyl,
4,4'-thiobis(6-tert-butyl-m-cresol) (C102),
2,5-bis(1,1,3,3-tetramethylbutyl)hydroquinone,4,4'-butylidenebis(6-tert-butyl-m-cresol),
3-(3,5-di-tert-butyl-4-hydroxyphenyl)propionic acid,
bis[3-[3-(tert-butyl)-4-hydroxy-5-methylphenyl]propanoic acid]2,4,8,10-tetraoxaspiro[5.5]undecaiie-3,9-diylbis(2-inetliylpropane-2,1-diyl) (Sumilizer GA80),
2,2'-methylenebis[6-(1-methylcyclohexyl)-p-cresol],
methyl 3-(3,5-di-tert-butyl-4-hydroxyphenyl)propionate,
1,3,5-tris(3,5-di-tert-butyl-4-hydroxybenzyl)-1,3,5-triazine-2,4,6(1H,3H,5H)-trione,
4-[[4,6-bis(n-octylthio)-1,3,5-triazine-2-yl]amino]-2,6-di-tert-butylphenol,
2,6-di-tert-butyl-4-ethylphenol, methyl 3-(3,5-di-tert-butyl-4-hydroxyphenyl)propionate,
triethylene glycol bis[3-(3-tert-butyl-4-hydroxy-5-methylphenyl)propionate],
2,4,6-tris(2,4-dihydroxyphenyl)-1,3,5-triazine,
3,3',5,5'-tetra-tert-butyl-4,4'-stilbene quinone,
diethyl 3,5-di-tert-butyl-4-hydroxybenzylphosphonate, 4,6-di-tert-butyl resorcinol,
3-(3,5-di-tert-butyl-4-hydroxyphenyl)-N'-[3-(3,5-di-tert-butyl-4-hydroxyphenyl)propanoyl]propanohydrazide, 4,4'-dihydroxy-3,3',5,5'-tetraisopropylbiphenyl,
2,6-di-tert-butyl-p-cresol, 2,2'-methylenebis(6-tert-butyl-4-ethylphenol),
2,5-di-tert-butylhydroquinone,
2-tert-butyl-6-(3-tert-butyl-2-hydroxy-5-methylbenzyl)-4-methylphenyl acrylate (Sumilizer GM),
pentaerythritol tetrakis[3-(3,5-di-tert-butyl-4-hydroxyphenyl)propionate],
2-mercaptobenzimidazole,
1'-hydroxy[2,2'-ethylidenebis[4,6-bis(1,1-dimethylpropyl)benzene]]-1-yl acrylate (Sumilizer GS),
2,2'-methylenebis(4-methyl-6-tert-butylphenol) (Sumilizer MDP-S), and
4,4'-thiobis(6-tert-butyl-m-cresol) (Sumilizer WX-R).
(UVA)
2-hydroxy-4-n-octyloxybenzophenone (Sumisorb 130),
2-(2'-hydroxy-5'-methylphenyl)benzotriazole (Sumisorb 200),
2-[2-hydroxy-3-(3,4,5,6-tetrahydrofthodalimide-methidyl)-5-methylphenyl]benzotriazole (Sumisorb 250),
2-(2-hydroxy-5-tert-octylphenyl)benzotriazole (Sumisorb 340),
2-(2H-benzotriazole-2-yl)-4,6-bis(1,1-dimethylpropyl)phenol (Sumisorb 350),
3,5-di-tert-butyl-4-hydroxybenzoic acid 2,4-di-tert-butylphenyl (Sumisorb 400) (C100),
2-(5-tert-butyl-2-hydroxyphenyl)benzotriazole (Tinuvin PS),
C7-C9-alkyl-3-[3-(2H-benzotriazole-2-yl)-5-(1,1-dimethylethyl)-4-hydroxyphenyl]propionether (Tinuvin 99-2),
bumetrizole (Tinuvin 326),
2-[2-hydroxy-3,5-bis(alpha,alpha-dimethylbenzyl)phenyl]-2H-benzotriazole (Tinuvin 900),
2-(2H-benzotriazole-2-yl)-6-(1-methyl-1-phenylethyl)-4-(1,1,3,3-tetramethylbutyl)phenol (Tinuvin 928),
2-[4-([2-hydroxy-3-dodecyloxypropyl]oxy)-2-hydroxyphenyl]-4,6-bis(2,4-dimethylphenyl)-1,3,5-triazine (Tinuvin 400),
2-[4-([2-hydroxy-3-tridecyloxypropyl]oxy)-2-hydroxyphenyl]-4,6-bis(2,4-dimethylphenyl)-1,3,5-triazine (Tinuvin 400),
2-[[3,5-bis(1,1-dimethylethyl)-4-hydroxyphenyl]methyl]-2-butylpropanedioic acid bis[1,2,2,6,6-pentamethyl-4-piperidiny1] (Tinuvin 144),
2,2'-thiodiethylbis[3-(3,5-di-tert-butyl-4-hydroxyphenyl)propionate] (Irganox 1035),
octyl-3,5-di-tert-butyl-4-hydroxy-hydrocinnamic acid (Irganox 1135),
2,4-bis[(dodecylthio)methyl]-6-methylphenol (Irganox 1726) phenyl 4-hydroxybenzoate,
2,6-di(tert-butyl)-4-(methoxycarbonyl)phenol,
3,5-di-tert-butylphenol,
3,3',5,5'-tetra-tert-butyl-2,2'-dihydroxybiphenyl,
2,6-diisopropylphenol,
2,4,6-tri-tert-butylphenol,
tris(4-tert-butyl-3-hydroxy-2,6-dimethylbenzyl)isocyanurate,
2-hydroxy-4-methoxybenzophenone,
2,2'-dihydroxy-4-methoxybenzophenone,
2-[4,6-bis(2,4-dimethylphenyl)-1,3,5-triazine-2-yl]-5-(octyloxy)phenol,
2-[4,6-bis(2,4-dimethylphenyl)-1,3,5-triazine-2-yl]-5-(isooctyloxy)phenol,
2,4-di-t-pentylphenyl-3,5-di-t-butyl-4-hydroxybenzoate,
mono (di, tri)(α-methylbenzyl)phenol (ANTAGE SP),
zinc dimethyldithiocarbamate (ACCEL PZ),
zinc diethyldithiocarbamate (ACCEL EZ),
zinc (II) dibutyldithiocarbamate (ACCEL EZ),
4-phenoxyphenol,
4,4'-dihydroxydiphenyl ether,
4-(4-hydroxyphenoxy)benzoic acid,
DL-thyronine,
2-[(diphenylphosphoryl)methyl]phenol, and
2,5-dihydroxyphenyl(diphenyl)phosphine oxide.

### <Amine-Based Compound>

N,N'-di-sec-butyl-1,4-phenylenediamine,
N-(1,3-dimethylbutyl)-N'-phenyl-1,4-phenylenediamine,
4,4'-bis(alpha,alpha-ditnethylbenzyl)diphenylamine,
4-isopropylaminodiphenylamine,
6-ethoxy-2,2,4-trimethyl-1,2-dihydroquinoline,
N-phenyl-1-naphthylamine,
N,N'-diphenyl-1,4-phenylenediamine,
N,N'-di-2-naphthyl-1,4-phenylenediamine,
N,N'-1,3-phenylenedimaleimide,
1-methyl 10-(1,2,2,6,6-pentamethyl-4-piperidinyl)decanedioate,
poly[[6-[(1,1,3,3-tetramethylbutyl)amino]-1,3,5-triazine-2,4-diyl]-[(2,2,6,6-tetramethyl-4-piperidyl)imino]-hexane-1,6-diyl-[(2,2,6,6-tetramethyl-4-piperidyl)imino],
6-(2-benzotriazolyl)-4-tert-octyl-6'-tert-butyl-4'-methyl-2,2'-methylenebisphenol (JAST-500),
a reaction product of diphenylamine and 2,4,4-trimethylpentene (ANTAGELDA),
poly(2,2,4-trimethyl-1,2-dihydroquinoline), and
2,2'-(1,4-phenylene)bis(4H-3,1-benzoxazine-4-one).

### <Phosphorus-Based Compound>

tri-p-tolyl phosphite,
triphenyl phosphite,
tris(2,4-di-tert-butylphenyl) phosphite (Irgafos 168),
3,9-bis(2,4-di-tert-butylphenoxy)-2,4,8,10-tetraoxa-3,9-diphosphaspiro[5.5]undecane,
tri-o-tolyl phosphite,
2-tert-butyl-6-methyl-4- {3-[(2,4,8,10-tetra-tert-butyldibeiizo[d,f][1,3,2]dioxaphosphepin-6-yl)oxy]propyl}phenol (Sumilizer GP),
3,9-bis(2,6-di-tert-butyl-4-methylphenoxy)-2.4,8,10-tetraoxa-3,9-diphosphaspiro[5.5]undecane (ADK STAB PEP-36),
2,4,8,10-tetra-tert-butyl-6-[(2-ethylhexane-1-yl)oxy]-12H-dibenzo[d,g][1,3,2]dioxaphosine (ADK STAB HP-10),
trisnonylphenylphosphite (ADK STAB 1178),
tetraalkyl(C12-15)-4,4'-isopropylidenediphenyl diphosphite, (ADK STAB 1500),
diphenyl(2-ethylhexyl) phosphite (ADK STAB C),
diphenyl isodecyl phosphite (ADK STAB 134A),
tricresyl phosphite (JP-3CP),
trilauryl phosphite (JP-312L),
tris(tridecyl) phosphite (JP-333E),
diphenyhnono(tridecyl) phosphite (JPM-313),
tetraphenyldipropylene glycol diphosphite (JPP-100),
4,4'-butylidenebis(3-methyl-6-t-butylphenylditridecyl phosphite) (JPH-1200),
bis(tridecyl)pentaerythritol diphosphite (JPP-88-1),
bis(nonylphenyl)pentaerythritol diphosphite (JPP-88-2),
bis(decyl)pentaerythritol diphosphite (JPE-10),
tristearyl phosphite (JP-318E),
a hydrogenated bisphenol A pentaerythritol phosphite polymer (JPH-3800), and
triphenylphosphine (JC-263).

### (Aliphatic Compound)

The aliphatic compound is an acyclic or cyclic alkyl-based compound, may contain a heteroatom, and may be saturated or unsaturated. Examples of the aliphatic compound include a phosphoric acid-based compound, an amine-based compound, and an organic sulfur compound.

### Examples of the aliphatic compound are shown below.

### <Sulfur-Based Compound>

nickel diethyldithiocarbamate,
pentaerythritol tetrakis[3-laurylthiopropionate],
didodecyl 3,3'-thiodipropionate,
ditetradecyl 3,3'-thiodipropionate (Sumilizer TP-M),
nickel (II) dibutyldithiocarbamate,
ditridecyl 3,3'-thiodipropionate (ADK STAB AO-503), and
2,2-bis[[3-(dodecylthio)-1-oxopropoxy]methyl]propane-1,3-diyl bis[3-(dodecylthio)propionate] (Sumilizer TP-D).

### <Amine-Based Compound>

dimethyl succinate 1-(2 hydroxyethyl)-4-hydroxy-2,2,6,6-tetramethyl-4-piperidine polycondensate (Tinuvin 111 FDL),
N,N',4,7-tetrakis{4,6-bis[N-butyl-N-(1,2,2,6,6-pentarnethyl-4-piperidyl)amino]-1,3,5-triazine-2-yl}-4,7-diazadecane-1,10-diamine (Tinuvin 111 FDL),
decanedioic acid bis[2,2,6,6-tetramethyl-1-(octyloxy)piperidine-4-yl] (Tinuvin 123),
2,4-bis[N-butyl-N-(1-cyclohexyloxy-2,2,6,6-tetramethylpiperidine-4-yl)amino]-6-(2-hydroxyethylamine)-1,3,5-triazine (Tinuvin 152),
bis(2,2,6,6-tetramethyl-4-piperidyl)sebacate (Tinuvin 770 DF),
bis(1,2,2,6,6-pentamethyl-4-piperidyl) sebacate (Tinuvin 292),
tetrakis(2,2,6,6-tetramethyl-4-piperidinyl) 1,2,3,4-butanetetracarboxylate (ADK STAB LA-52),
bis(1,2,2,6,6-pentamethylpiperidine-4-yl)=3,4-bis{[(1,2,2,6,6-pentamethylpiperidine-4-yl)oxy]carbonyl} hexanedioate (ADK STAB LA-57),
carbonic acid=bis(2,2,6,6-tetramethyl-1-undecyloxypiperidine-4-yl) (ADK STAB LA-81),
1,2,2,6,6-pentamethyl-4-piperidyl methacrylate, (ADK STAB LA-82),
2,2,6,6-tetramethyl-4-piperidyl methacrylate, (ADK STAB LA-87), and
2,2,6,6-tetramethyl-4-piperidinyl stearate, (ADK STAB LA-40MP).

### <Phosphoric Acid-Based Compound>

trioctyl phosphite,
tris(2-ethylhexyl) phosphite,
triisodecyl phosphite,
trioleyl phosphite,
trihexyl phosphite,
tributyl phosphite,
tris(1,1,1,3,3,3-hexafluoro-2-propyl) phosphite, and
3,9-dioctadecane-1-yl-2,4,8,10-tetraoxa-3,9-diphosphaspiro[5.5]undecane.

### (Particularly Suitable Compound among Compounds C)

It is suitable that the compound C is selected from compounds represented by formula (C1).

Ph^{t}-X-(Ph²)ₐ ... (C1)

provided that, a is 1 or 2, and Ph¹ is represented by formula (C2), 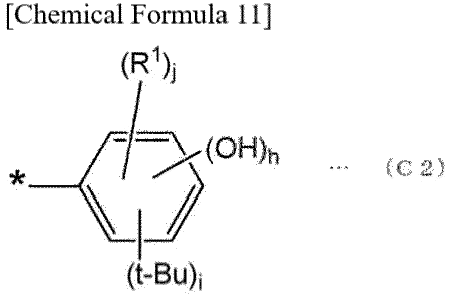
where R¹ is independently selected from the group consisting of an alkyl group having 1 to 5 carbon atoms except a t-Bu group, h is an integer of 1 to 3, i is an integer of 1 to 3, j is an integer of 0 to 3, h + i + j is 5 or less, one or more t-Bu groups are necessarily present at an ortho position of at least one OH group,
Ph² is represented by formula (C3), 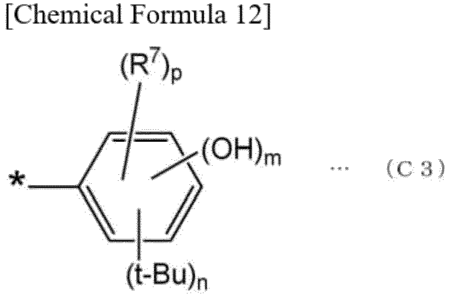
where m is an integer of 0 to 3, n is an integer of 0 to 3, p is an integer of 0 to 3, m + n + p is 5 or less, R⁷ is independently selected from the group consisting of an alkyl group having 1 to 5 carbon atoms except a t-Bu group,
X is selected from the group consisting of -O-C(=O)-, -(O=)C-O-, -C(R⁸)₂-, -S-, -O-, a divalent or trivalent aromatic hydrocarbon group in which the number of carbons constituting a ring is 6 to 14, and 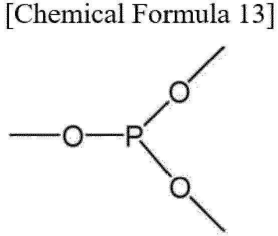
where R⁸ is independently selected from the group consisting of a hydrogen atom and an alkyl group having 1 to 5 carbon atoms, and
* in the structural formula represents a bond.

### As for Formula (C2)

At least one OH group can be located at the para position with respect to the bond bonded to X. h may be 1 or 2.

One or two t-Bu groups can be present at the ortho position of the OH group. i may be 1 or 2.

j may be 0 or 1. h + i + j may be 5 or less, 4 or less, 3 or less, or 3.

### As for Formula (C3)

When m is 1 or more, it is suitable that one or two t-Bu groups are present at the ortho position of at least one OH group. When m is 1 or more, at least one OH group can be located at the para position with respect to the bond bonded to X. m may be 1 or 2. m + n + p may be 5 or less, 4 or less, 3 or less, or 3.

When m is 0, n can be 1 or more, and may be 2 or more. When m is 0, at least one t-Bu group can be present at the para position with respect to the bond bonded to X. n may be 2. m + n + p may be 5 or less, 4 or less, 3 or less, 2 or less, 2

### (As for X)

When m is 0 in formula (C3), it is suitable that X is -(O=)C-O-among -O-C(=O)- and -(O=)C-O-.

In the aromatic hydrocarbon group of X, a hydrogen atom or a hydrocarbon group may be bonded to a carbon atom constituting the ring. The number of carbon atoms of the hydrocarbon group bonded to the carbon atom constituting the ring may be 1 to 5. The number of carbon atoms constituting the ring of the aromatic hydrocarbon group may be 6, and in this case, a = 2 and the bond of (C2) may be bonded to the carbon atom at the 1-position constituting the ring of the benzene ring of X, and the bonds of (C2) and (C3) may be bonded to the carbon atoms at the 3-position and the 5-position.

Examples of the compound of formula (C1) are as described below: 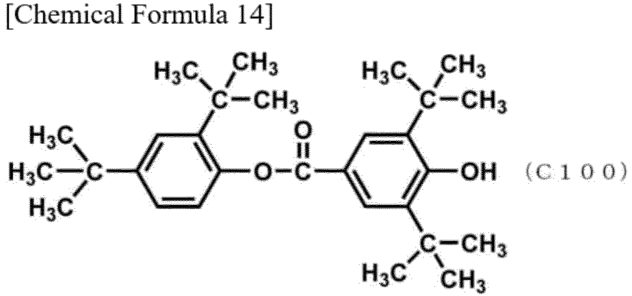 2,4-Di-tert-butylphenyl3,5-di-tert-buty-4-hydroxybenzoate (sumisorb 400) 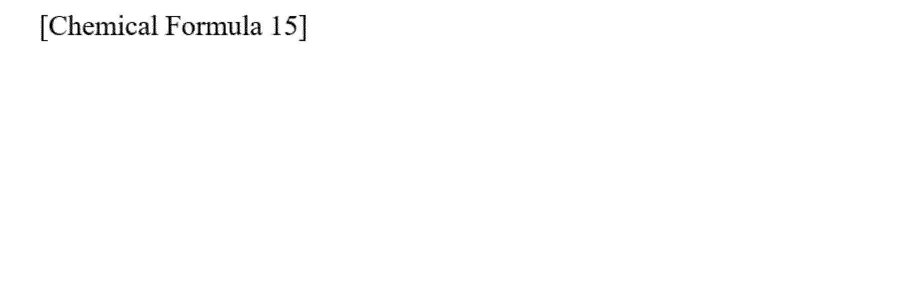 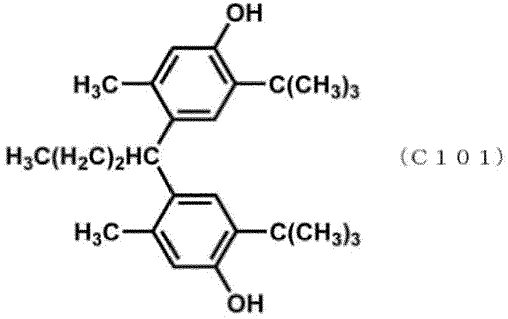 4,4'-Butylidenebis(6-tert-butyl-m-cresol) 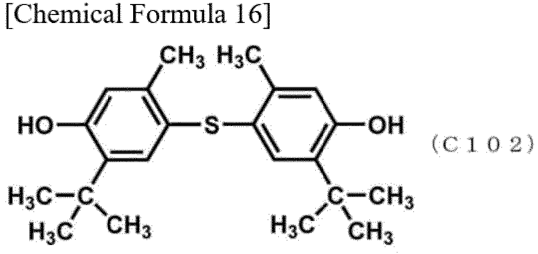 4,4'-Tbiobis(6- tert-buty]-m-cresol) 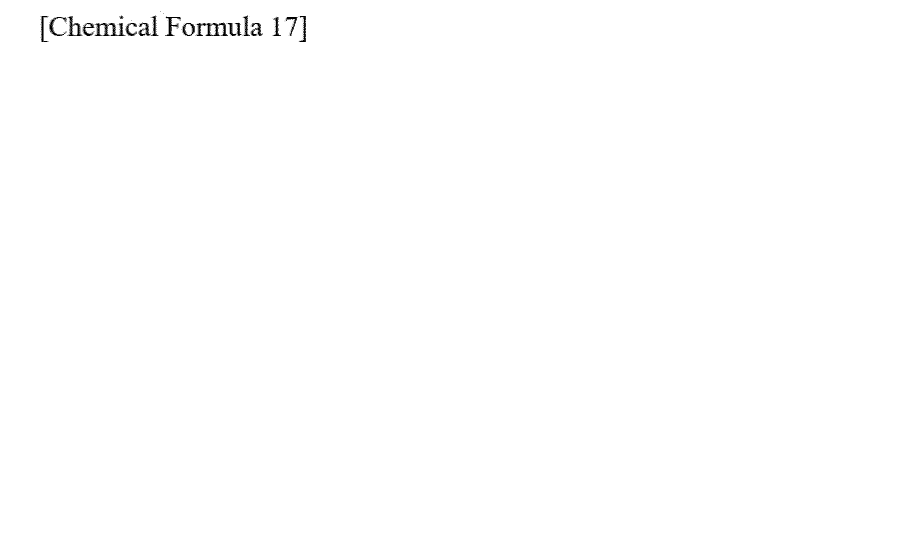 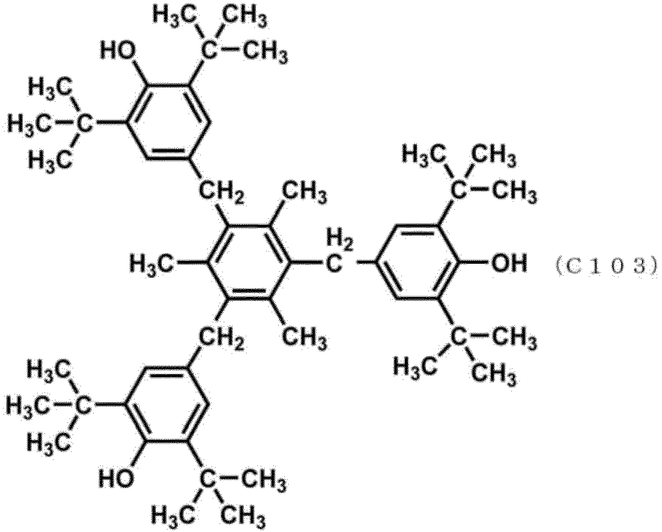 2,4,6-Tris(3',5'-di-tert-buty-4'-hydroxybenzyl)mesitylene

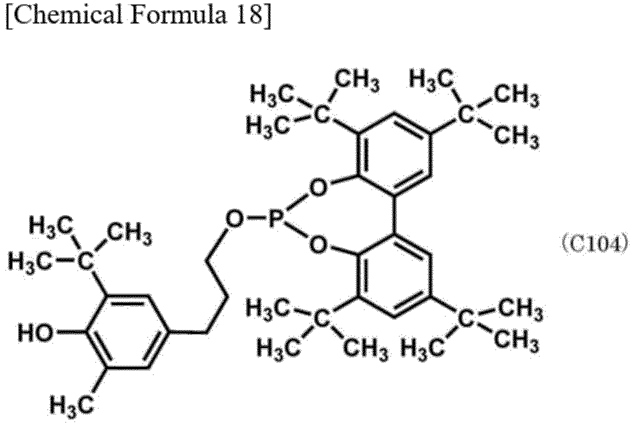

### Sumilizer GP

### (When Compound C Is Mixture of Two Kinds of Compounds)

When the composition contains two or more kinds of the compounds C, the composition may contain a first compound (which may be one or more) having MFR (X)/MFR (B) of 0.8 or less, and a second compound (which may be one or more) having MFR (X)/MFR (B) of more than 0.8 and 1.0 or less.

Examples of the first compound include a compound represented by formula (C1).

Examples of the second compound include Sumilizer GM, Sumirizer GS, Sumilizer GA80, Irganox 1010, Sumilizer GP, Sumilizer TP-D, Sumilizer TP-M, Irgafos 168, and Carbosista TCC-NP (cyclic carbodiimide)

It is also suitable to use two or more of the second compounds, and examples of such a combination include a combination of Sumilizer GA80 and Sumilizer TP-D, and a combination of Irganox 1010 and Sumilizer TP-D.

### (Compound C' Having MFR (X)/MFR (B) of More Than 2.0)

It is suitable that the composition also does not contain a compound C' having MFR (X)/MFR (B) of more than 2.0, more than 1.5, or more than 1.0.

### <Olefin-Based Polymer A>

The olefin-based polymer A is a polymer containing 50 mass% or more of a structural unit derived from an olefin having 2 or more and 10 or less carbon atoms (provided that, the total amount of the olefin-based polymer is taken as 100 mass%). Examples of the olefin having 2 or more and 10 or less carbon atoms include ethylene, propylene, 1-butene, 4-methyl-1-pentene, 1-hexene, 1-octene, and 1-decene.

The olefin-based polymer A may contain a structural unit derived from a monomer except olefins having 2 or more and 10 or less carbon atoms Examples of the monomer except olefins having 2 or more and 10 or less carbon atoms include aromatic vinyl monomers such as styrene; unsaturated carboxylic acids such as acrylic acid and methacrylic acid; unsaturated carboxylic acid esters such as methyl acrylate, ethyl acrylate, butyl acrylate, methyl methacrylate, and ethyl methacrylate; vinyl ester compounds such as vinyl acetate; conjugated dienes such as 1,3-butadiene and 2-methyl-1,3-butadiene (isoprene); and non-conjugated dienes such as dicyclopentadiene and 5-ethylidene-2-norbornene.

The olefin-based polymer A can be at least one selected from the group consisting of an ethylene-based polymer, a propylene-based polymer, and a butene-based polymer, and may be a combination of any two or more kinds thereof.

The ethylene-based copolymer is a polymer containing 50 mass% or more of a structural unit derived from ethylene, and examples thereof include an ethylene homopolymer, an ethylene-1-butene copolymer, an ethylene-1-hexene copolymer, an ethylene-1-octene copolymer, and an ethylene-1-butene-1-hexene copolymer. The ethylene-based copolymer may be a combination of two or more ethylene-based copolymers.

The propylene-based copolymer is a polymer containing 50 mass% or more of a structural unit derived from propylene, and examples thereof include a propylene homopolymer, a propylene-ethylene copolymer, a propylene-1-butene copolymer, a propylene-1-hexene copolymer, a propylene-1-octene copolymer, a propylene-ethylene-1-butene copolymer, a propylene-ethylene-1-hexene copolymer, and a propylene-ethylene-1-octene copolymer. The propylene-based copolymer may be a combination of two or more kinds of propylene-based copolymers. It is suitable that the olefin-based polymer A is a propylene-based copolymer.

The butene-based copolymer is a polymer containing 50 mass% or more of a structural unit derived from 1-butene, and examples thereof include a 1-butene homopolymer, a 1-butene-ethylene copolymer, a 1-butene-propylene copolymer, a 1-butene-1-hexene copolymer, a 1-butene-1-octene copolymer, a 1-butene-ethylene-propylene copolymer, a 1-butene-ethylene-1-hexene copolymer, a 1-butene-ethylene-1-octene copolymer, a 1-butene-propylene-1-hexene copolymer, and a 1-butenepropylene-1-octene copolymer. The butene-based copolymer may be a combination of two or more kinds of butene-based copolymers.

The olefin-based polymer A can be produced by using a known polymerization method using a known polymerization catalyst.

The melt mass flow rate (MFR) of the olefin-based polymer A as measured according to JIS K7210-2014 under conditions of a temperature of 230°C or 190°C and a load of 2.16 kgf is preferably 0.1 g/10 min or more and 200 g/10 min or less.

### (Additive)

The composition may contain an additive as necessary. The additive can be at least one selected from the group consisting of a stabilizer, an anti-bacterial agent, an anti-fungal agent, a dispersing agent, a plasticizer, a flame retardant, a tackifier, a colorant, a metal powder, an organic powder, an inorganic fiber, an organic fiber, an organic and inorganic composite fiber, an inorganic whisker, and a filler.

Examples of the stabilizer include at least one selected from the group consisting of a lubricant, an anti-aging agent, a heat stabilizer, a light resistance agent, a weathering agent, a metal deactivator, an ultraviolet absorber, a light stabilizer, and a copper inhibitor. Examples of the light resistance agent include a hindered amine-based light resistance agent.

Examples of the colorant include at least one selected from the group consisting of titanium oxide, carbon black, and an organic pigment. Examples of the metal powder include ferrite.

Examples of the organic powder include a protein. Examples of the inorganic fiber include a glass fiber and a metal fiber. Examples of the organic fiber include a carbon fiber and an aramid fiber. Examples of the inorganic whisker include potassium titanate whisker.

Examples of the filler include at least one selected from the group consisting of a glass bead, a glass balloon, a glass flake, asbesto, mica, calcium carbonate, talc, silica, calcium silicate, hydrotalcite, kaolin, diatomaceous earth, graphite, pumice stone, ebo flour, cotton flock, cork powder, barium sulfate, fluororesin, cellulose powder, and wood powder.

The composition may contain only one of the above additives, and may contain a combination of two or more kinds thereof.

### <Constitution of Composition I>

The content of the compound C is 0.01 to 20 parts by mass with respect to 100 parts by mass of the total of the polymer B and the compound C. The content of the compound C may be 15 parts by mass or less, 10 parts by mass or less, 7 parts by mass or less, 5 parts by mass or less, 3 parts by mass or less, 2 parts by mass or less, or 1 part by mass or less.

The polymer B can account for more than 50 mass% of the composition I, and can account for 60 mass% or more, 70 mass% or more, 80 mass% or more, or 90 mass% or more.

The total proportion of the polymer B and the compound C in the entire composition I may be 50 mass% or more, 60 mass% or more, 70 mass% or more, 80 mass% or more, 90 mass% or more, or 95 mass% or more.

The composition I may contain an olefin-based polymer A. The olefin-based polymer A may be 40 mass% or less, 30 mass% or less, 20 mass% or less, or 10 mass% or less of the composition I.

In the composition I, the olefin-based polymer A can form a dispersed phase, and the polymer B can form a continuous phase. The average circle equivalent diameter of the dispersed phase (island portion) can be 10 nm to 400 µm.

According to the composition I of the present embodiment, by containing the compound C, mechanical properties, for example, elastic modulus, are excellent. Examples of the elastic modulus include flexural modulus and tensile modulus. The reason for this is not clear, but it is considered that the compound C can suppress thermal decomposition of the aliphatic polyester-based resin during melt-kneading.

In particular, when the composition I contains the compound C represented by formula (C1), the effect is high.

### (Composition II)

A composition II according to an embodiment contains a polyolefin-based polymer A, a polymer B, and a compound C. The polymer B is an aliphatic polyester-based polymer.

The content of the compound C is 0.01 to 20 parts by mass with respect to 100 parts by mass of the total of the polymer A, the polymer B, and the compound C.

The compound C satisfies the following requirement 1:
requirement 1: when a melt mass flow rate of the polymer B as measured under conditions of a temperature of 210°C and a load of 2.16 kgf is designated as MFR (B), and
a melt mass flow rate of a mixture X containing 0.5 parts by mass of the compound C with respect to 100 parts by mass of the total of the polymer B and the compound C as measured under conditions of a temperature of 210°C and a load of 2.16 kgf is designated as MFR (X), MFR (X)/MFR (B) is 2.0 or less.

That is, the composition II according to the present embodiment is different from the composition I in that the polyolefin-based polymer A is essential, and all the matters described in the composition I are applicable to the composition II except for this point.

Hereinafter, differences from the composition I will be described.

### (As for Olefin-Based Polymer A)

In the composition II, the content of the olefin-based polymer A may be more than 50 parts by mass with respect to 100 parts by mass of the total of the olefin-based polymer A and the polymer B. The content of the olefin-based polymer A may be 60 parts by mass or more, 70 parts by mass or more, 80 parts by mass or more, 90 parts by mass or more.

The total proportion of the polymer A, the polymer B, and the compound C in the entire composition II may be 20 mass% or more, 30 mass% or more, 40 mass% or more, 50 mass% or more, 60 mass% or more, or 70 mass% or more.

The polymer A can account for more than 50 mass% of the composition II, and can account for 60 mass% or more, 70 mass% or more, 80 mass% or more, or 90 mass% or more.

### (Compound C)

Similarly to the composition I, it is suitable to contain a first compound C having MFR (X)/MFR (B) of 0.8 or less; and a second compound C having MFR (X)/MFR (B) of more than 0.8 and 1.0 or less.

It is suitable that the composition II also does not contain a compound C' having MFR (X)/MFR (B) of more than 2.0, more than 1.5, or more than 1.0.

### (Effects)

According to the composition II of the present embodiment, by containing the compound C, mechanical properties are excellent. Examples of the mechanical properties include flexural modulus and tensile elongation. The reason for this is not clear, but it is considered that the compound C can suppress not only thermal decomposition of the aliphatic polyester-based resin but also thermal decomposition of the olefin-based polymer during melt-kneading.

In the composition II, the polymer B can form a dispersed phase, and the olefin-based polymer A can form a continuous phase. The average circle equivalent diameter of the dispersed phase (island portion) can be 10 nm to 400 µm.

### (Method for Producing Composition)

The compositions I and II can be obtained by melt-kneading each raw material component.

The kneading temperature (set temperature of a kneader) is preferably 150 to 300°C and more preferably 170°C to 280°C. It is possible to perform processing at 210°C or higher.

The composition I can be obtained by melt-kneading the polymer B, the compound C, and optionally added additive, the olefin-based polymer A and the like.

The composition II can be produced by melt-kneading all of the olefin-based polymer A, the polymer B, the compound C, and the optionally added additive at once.

The composition II may be produced by a first step of first melt-kneading some of the olefin-based polymer A, all of the polymer B, some or all of the compound C, and some or all of the optionally added additive to produce a preliminary composition, and then a second step of melt-kneading the preliminary composition with the remaining olefin-based polymer A, the remaining compound C, and the remaining of the optionally added additive. In the first step, the olefin-based polymer may not be added at all.

When the compound C of the composition II contains the compound C having MFR (X)/MFR (B) of 0.8 or less, it is suitable to add the compound C in the first step.

When the compound C of the composition II is a mixture of the first compound C having MFR (X)/MFR (B) of 0.8 or less and the second compound C having MFR (X)/MFR (B) of more than 0.8 and 1.0 or less, the first compound C and the second compound C may be all added in the first step, or some or all of the first compound C may be added in the first step and some or all of the second compound C may be added in the second step.

### (Method for Producing Molded Article of Composition)

A molded article of the above-described composition having a desired shape can be obtained by using a known resin molding method such as an injection molding method, an extrusion molding method, a vacuum molding method, a compression molding method, a press molding method, a foam molding method, a blow molding method, or a rotation molding method.

Furthermore, the above-described composition can be bonded to other materials such as other resins, metals, paper, and leather to provide a multi-layer structure.

The surface of a molded article of the composition of the present invention may be subjected to a surface treatment. Examples of the surface treatment method include methods such as embossing treatment, corona discharge treatment, flame treatment, plasma treatment, and ozone treatment.

The above-described composition can be widely used as a resin material.

Examples of use applications of the resin composition of the present invention include fiber materials, external structural members, furniture and interior decorative members, household electric appliance members, toy members, gardening members, automobile members, and packaging materials. Examples of the fiber materials include a clothing fabric member, an interior fabric member, and an industrial fiber member, examples of the external structural members include a carport member, a fence member, a gate door member, a gate pillar member, a post member, a cycle port member, a deck member, a sunroom member, a roof member, a terrace member, a handrail member, a shade member, and an awning member, examples of the furniture and interior decorative members include a sofa member, a table member, a chair member, a bed member, a chest member, a cabinet member, and a dresser member, examples of the household electrical appliance members include a member for a watch, a mobile phone member, and a white home electric appliance member, examples of the toy members include a member for a plastic model, a member for a diorama, and a member for a video game main body, examples of the gardening members include a member for a planter, a member for a vase, and a member for a flowerpot, examples of the automobile members include a bumper material, an instrument panel material, and an airbag cover material, and examples of the packaging materials include a food packaging material, a packaging material for fiber, and a packaging material for miscellaneous goods. Further, examples of other use applications include monitor members, office automation (OA) equipment members, medical members, drainage pans, toiletry members, bottles, containers, snow remover members, and various building members.

### Examples

Hereinafter, the present invention will be described using Examples and Comparative Examples. The olefin-based polymer A, the aliphatic polyester-based polymer B, and the compound C used in Examples and Comparative Examples are shown below.

### (1) Polymer A

### (A-1) Propylene Homopolymer

MFR (230°C, 2.16 kg load): 7 g/10 min
Melting point (Tm): 163°C

### (2) Polymer B

(B-1) Poly(3-hydroxybutyrate-co-3-hydroxyhexanoate) Structural formula: formula (BI-3)
Content (mol%) of comonomer (3HH) component: 0.4 mol% Weight average molecular weight (Mw): 397800
MFR (190°C, 2.16 kg load): 8 g/10 min
MFR (B-1) (210°C, 2.16 kg load): 171 g/10 min
Melting point (Tm): 175°C

### (3) Compound C

(C-1) 2,4-Di-tert-butylphenyl 3,5-di-tert-butyl-4-hydroxybenzoate
(Trade name) Sumisorb 400: manufactured by Sumika Chemtex Company, Limited
Cas No: 4221-80-1
Molecular weight: 438
MFR (X) (210°C, 2.16 kg load): 104.9 g/10 min
MFR (X)/MFR (B-1): 0.61
(C-2) 2,2-bis[[3-(dodecylthio)-1-oxopropoxy]methyl]propane-1,3-diyl bis[3-(dodecylthio)propionate]
(Trade name) Sumilizer TP-D: manufactured by Sumitomo Chemical Co., Ltd.
Cas No: 29598-76-3
Molecular weight: 1162
MFR (X) (210°C, 2.16 kg load): 146.4 g/10 min
MFR (X)/MFR (B-1): 0.86
(C-3) 2-[1-(2-Hydroxy-3,5-di-tert-pentylphenyl)ethyl]-4,6-di-tert-pentylphenyl acrylate
(Trade name) Sumilizer GS: manufactured by Sumitomo Chemical Co., Ltd.
Cas No: 123968-25-2
Molecular weight: 549
MFR (X) (210°C, 2.16 kg load): 162.2 g/10 min
MFR (X)/MFR (B-1): 0.95
(C-4) Pentaerythritol tetrakis(3-(3,5-di-tert-butyl-4-hydroxyphenyl)propionate)
(Trade name) Irganox 1010: manufactured by BASF Japan Ltd.
Cas No: 6683-19-8
Molecular weight: 1178
MFR (X) (210°C, 2.16 kg load): 149.5 g/10 min
MFR (X)/MFR (B-1)v: 0.87
(C-5)3,9-Bis{2-[3-(3-tert-butyl-4-hydroxy-5-methylphenyl)-propionyloxy]-1,1-dimethylethyl}-2,4,8,10-tetraoxaspiro[5.5]undecane
(Trade name) Sumilizer GA-80: manufactured by Sumitomo Chemical Co., Ltd.
Cas No: 90498-90-1
Molecular weight: 741
MFR (X) (210°C, 2.16 kg load): 153.8 g/10 min
MFR (X)/MFR (B-1): 0.90
(C-6) Bis(2,2,6,6-tetramethyl-4-piperidyl) sebacate
(Trade name) Tinuvin 770 DF: manufactured by BASF Japan Ltd.
Cas No: 52829-07-9
Molecular weight: 481
MFR (X) (210°C, 2.16 kg load): 403.4 g/10 min
MFR (X)/MFR (B-1): 2.36

Physical properties of each polymer and composition were measured according to the methods described below.

### (1) Melt Mass Flow Rate (MFR, Unit: g/10 min)

It was measured according to the method specified in JIS K7210-2014. The measurement temperature was 230°C, 210 or 190°C, and the load was 2.16 kg. A cylinder to be melt-kneaded is made of metal, and the resin is not irradiated with light.

The MFR (X) is a melt mass flow rate of a mixture X containing 0.5 parts by mass of any of the compounds C-1 to C-6 with respect to 100 parts by mass of the total of the polymer B-1 and any of the compounds C-1 to C-6, as measured at a temperature of 210°C and a load of 2.16 kgf.

The MFR (B-1) is a melt mass flow rate of the polymer B-1 as measured under the conditions of a temperature of 210°C and a load of 2.16 kgf.

### (2) Weight Average Molecular Weight (Mw)

The weight average molecular weight (Mw) was calculated based on the measurement result of gel permeation chromatography (GPC). In the measurement of GPC, GPC-150C manufactured by Waters Corporation was used as a measuring device, an ortho-dichlorobenzene solution having a polymer concentration of 0.05 wt% was used, a mixed polystyrene gel column (PSKgelGMH6-HT manufactured by Tosoh Corporation) was used as a column, and the measurement temperature was 135°C.

### (3) Melting Point (Tm) of Polymer

It was measured according to the method specified in JIS K7121. The measurement temperature was -50°C to 200°C or -50°C to 250°C, and the temperature increasing rate was 10°C/min.

### (4) Content of Comonomer Component of Polymer B

The content of the comonomer component is the molar ratio of another repeating unit (3-hydroxyhexanoate (3HH) or 4-hydroxybutyrate (4HB)) except 3-hydroxybutyrate to the number of total ester repeating units of the hydroxyalkanoate of the polymer B.

The content of the comonomer component was determined using the 1H-NMR spectrum described in L. Tripathi., M. C. Factories, 11, 44

(2012).

### [Measurement Conditions]

Model: Bruker AVANCE 600
Probe: 10 mm cryoprobe
Measurement temperature: 135°C
Pulse repetition time: 1 sec
Pulse width: 45°
Number of integrations: 700 times
Magnetic field strength: 600 MHz

### (5) Tensile Elongation (UE)

Injection molding was performed at a molding temperature of 220°C and a mold temperature of 50°C using SI30III type injection molding machine manufactured by Toyo Machinery & Metal Co., Ltd. to obtain a tensile test piece having a thickness of 2 mm. Two parallel marking lines were drawn at the central portion of the test piece at an interval of 25 mm in the longitudinal direction of the test piece over the entire width along the width direction of the test piece, and then the test piece was pulled in the longitudinal direction at a temperature of 23°C and a tensile speed of 50 mm/min by a tensile tester until the test piece was broken. The tensile elongation (unit: %) defined by the ratio of the distance between the marking lines when the test piece was broken to the initial distance between the marking lines (25 mm) was calculated.

### (6) Flexural Modulus (FM)

Injection molding was performed at a molding temperature of 220°C and a mold temperature of 50°C using SI30III type injection molding machine manufactured by Toyo Machinery & Metal Co., Ltd. to obtain a bending test piece having a size of 4 mm in thickness, 10 mm in width, and 80 mm in length. The flexural modulus (unit: MPa) at 23°C was measured under the measurement conditions according to JIS-K-7171.

### (7) Tensile Modulus

Injection molding was performed at a molding temperature of 220°C and a mold temperature of 50°C using SI30III type injection molding machine manufactured by Toyo Machinery & Metal Co., Ltd. to obtain a tensile test piece having a thickness of 2 mm. The test piece was pulled in the longitudinal direction at a temperature of 23°C and a tensile speed of 50 mm/min by a tensile tester. The tensile modulus (unit: MPa) was measured from the ratio between the tensile stress within the tensile proportional limit and the strain corresponding thereto under the measurement conditions according to JIS-K-7139.

### (Example A; Composition I)

### (Example A1)

99.9 mass% of the polymer (B-1) and 0.1 mass% of the compound (C-1) were mixed, and the mixture was melt-kneaded using a 15 mm twin screw extruder KZW15-45MG (manufactured by Technovel Corporation) under the conditions of a cylinder setting temperature of 165°C, a screw rotation speed of 500 rpm, and an extrusion amount of about 4 kg/hr to obtain a resin composition (Q-1).

### (Example A2)

A resin composition (Q-1) was obtained in the same manner as in Example A1, except that the polymer (B-1) was 99.5 mass%, and the compound (C-1) was 0.5 mass%.

### (Example A3)

A resin composition (Q-1) was obtained in the same manner as in Example A1, except that the polymer (B-1) was 99 mass%, and the compound (C-1) was 1 mass%.

### (Comparative Example A1)

A resin composition (Q-1) was obtained in the same manner as in Example A1, except that the polymer (B-1) was 100 mass%, and the compound (C-1) was not added.

The tensile modulus and the flexural modulus of the obtained resin composition were measured. The results are shown in Table 1.

**[Table 1]**

| Table 1 | | | Example A1 | Example A2 | Example A3 | Comparative Example A1 |
|---|---|---|---|---|---|---|
| Composition | Aliphatic polyester-based polymer B | Type | B-1 | B-1 | B-1 | B-1 |
| | | mass% | 99.9 | 99.5 | 99 | 100 |
| | Compound C | Type | C-1 | C-1 | C-1 | - |
| | | mass% | 0.1 | 0.5 | 1 | 0 |
| Evaluation of composition | Tensile Modulus | MPa | 2650.1 | 2739.5 | 2726.2 | 2499.5 |

### (Example B; Composition II)

### (Example B1)

First step: 18.8 mass% of the polymer (A-1), 80.0 mass% of the polymer (B-1), 1.0 mass% of the compound (C-1), and 0.2 mass% of the compound (C-2) were mixed, and the mixture was melt-kneaded using a 15 mm twin screw extruder KZW15-45MG (manufactured by Technovel Corporation) under the conditions of a cylinder setting temperature of 215°C, a screw rotation speed of 500 rpm, and an extrusion amount of about 4 kg/hr to obtain a resin composition (Q-1).

Second step: 6.25 mass% of the resin composition (Q-1) and 93.75 mass% of the polymer (A-1) were mixed, and the mixture was melt-kneaded using a 15 mm twin screw extruder KZW15-45MG (manufactured by Technovel Corporation) under the conditions of a cylinder setting temperature of 215°C, a screw rotation speed of 500 rpm, and an extrusion amount of about 4 kg/hr to obtain a composition. The tensile elongation (UE) and the flexural modulus (FM) of the composition were evaluated.

### (Example B2)

The same procedure as in Example 1 was performed except that in the second step, 6.25 mass% of the resin composition (Q-1), 93.75 mass% of the polymer (A-1), and 0.3 parts by mass of the compound (C-3) were mixed.

### (Example B3)

The same procedure as in Example 1 was performed except that in the second step, 6.25 mass% of the resin composition (Q-1), 93.75 mass% of the polymer (A-1), 0.3 parts by mass of the compound (C-3), 0.9 parts by mass of the compound (C-2), and 0.3 parts by mass of the compound (C-4) were mixed.

### (Comparative Example B1)

First step: 18.8 mass% of the polymer (A-1) and 81.2 mass% of the polymer (B-1) were mixed, and the mixture was melt-kneaded using a 15 mm twin screw extruder KZW15-45MG (manufactured by Technovel Corporation) under the conditions of a cylinder setting temperature of 215°C, a screw rotation speed of 500 rpm, and an extrusion amount of about 4 kg/hr to obtain a resin composition (Q-3).

Second step: The same procedure as in Example B1 was performed except that 6.25 mass% of the resin composition (Q-3) and 93.75 mass% of the polymer (A-1) were mixed.

### (Comparative Example B2)

First step: 19.0 mass% of the polymer (A-1), 80.0 mass% of the polymer (B-1), and 1.0 mass% of the component (C-6) were mixed, and the mixture was melt-kneaded using a 15 mm twin screw extruder KZW15-45MG (manufactured by Technovel Corporation) under the conditions of a cylinder setting temperature of 215°C, a screw rotation speed of 500 rpm, and an extrusion amount of about 4 kg/hr to obtain a resin composition (Q-4).

Second step: The same procedure as in Example B1 was performed except that 6.25 mass% of the resin composition (Q-4) and 93.75 mass% of the polymer (A-1) were mixed.

The final composition and evaluation results of each composition are shown in Table 2. The MFR (X) in Table 2 is a melt mass flow rate of a mixture X containing 0.5 parts by mass of any of the compound C-1 to C-4 with respect to 100 parts by mass of the total of the polymer B-1 and any of the compound C-1 to C-4, as measured at a temperature of 210°C and a load of 2.16 kgf.

The MFR (B-1) is a melt mass flow rate of the polymer B-1 as measured under the conditions of a temperature of 210°C and a load of 2.16 kgf.

**[Table 2]**

| Table 2 | | | Example B1 | Example B2 | Example B3 | Comparative Example B1 | Comparative Example B2 |
|---|---|---|---|---|---|---|---|
| Composition | Olefin-based polymer A | Type | A-1 | A-1 | A-1 | A-1 | A-1 |
| | | mass%, | 94.925 | 94.641 | 93.536 | 95.000 | 94.9375 |
| | Aliphatic polyester-based polymer B | Type | B-1 | B-1 | B-1 | B-1 | B-1 |
| | | mass% | 5.000 | 4.985 | 4.912 | 5.000 | 5 |
| | Compound C | Type | C-1 | C-1 | C-1 | | C-6 |
| | | MFR (X)/MFR (B-1) | 0.61 | 0.61 | 0.61 | | 2.36 |
| | | mass ppm | 625 | 625 | 616 | | 625 |
| | | Type | C-2 | C-2 | C-2 | | |
| | | MFR (X)/MFR (B-1) | 0.86 | 0.86 | 0.86 | | |
| | | mass ppm | 125 | 125 | 9125 | | |
| | | Type | | C-3 | C-3 | | |
| | | MFR (X)/MFR (B-1) | | 0.95 | 0.95 | | |
| | | mass ppm | | 2991 | 2956 | | |
| | | Type | | | C-4 | | |
| | | MFR (X)/MFR (B-1) | | | 0.87 | | |
| | | mass ppm | | | 2956 | | |
| Evaluation of composition | Tensile elongation (UE) | % | 739 | 293 | 352 | 186 | 125 |
| | Flexural modulus (FM) | MPa | 1725 | 1908 | 1856 | 1323 | 1576 |

## Claims

1. A composition comprising:
a polymer B; and
a compound C, wherein
the polymer B is an aliphatic polyester-based polymer,
a content of the compound C is 0.01 to 20 parts by mass with respect to 100 parts by mass of a total of the polymer B and the compound C, and
the compound C satisfies the following requirement 1:
requirement 1: when a melt mass flow rate of the polymer B as measured under conditions of a temperature of 210°C and a load of 2.16 kgf is designated as MFR (B), and
a melt mass flow rate of a mixture X containing 0.5 parts by mass of the compound C with respect to 100 parts by mass of the total of the polymer B and the compound C as measured under conditions of a temperature of 210°C and a load of 2.16 kgf is designated as MFR (X), MFR (X)/MFR (B) is 2.0 or less.

2. The composition according to Claim 1, wherein MFR (X)/MFR (B) in the requirement 1 is 0.8 or less.

3. The composition according to Claim 1 or 2, wherein the compound C is selected from compounds represented by formula (C1):
Ph¹-X-(Ph²)ₐ ... (C1)
provided that, a is 1 or 2, and Ph¹ is represented by formula (C2), 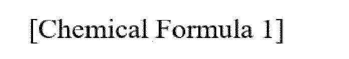 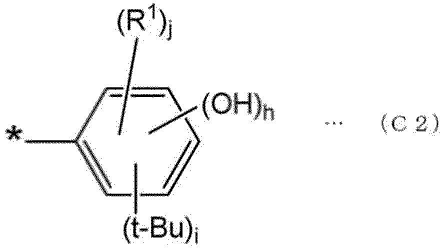
where R¹ is independently selected from the group consisting of an alkyl group having 1 to 5 carbon atoms except a t-Bu group, h is an integer of 1 to 3, i is an integer of 1 to 3, j is an integer of 0 to 3, h + i + j is 5 or less, one or more t-Bu groups are necessarily present at an ortho position of at least one OH group,
Ph² is represented by formula (C3), 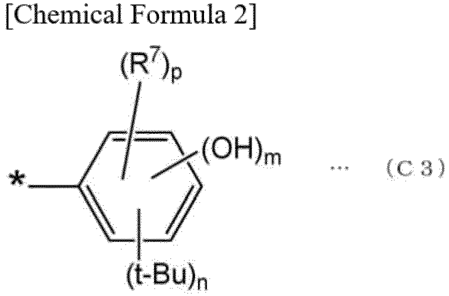
where m is an integer of 0 to 3, n is an integer of 0 to 3, p is an integer of 0 to 3, m + n + p is 5 or less, R⁷ is independently selected from the group consisting of an alkyl group having 1 to 5 carbon atoms except a t-Bu group,
X is selected from the group consisting of -O-C(=O)-, -(O=)C-O-, -C(R⁸)₂-, -S-, -O-, a divalent or trivalent aromatic hydrocarbon group in which the number of carbons constituting a ring is 6 to 14, and 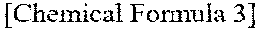 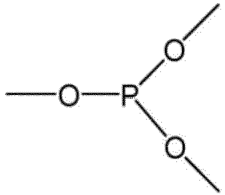
where R⁸ is independently selected from the group consisting of a hydrogen atom and an alkyl group having 1 to 5 carbon atoms, and
* in the structural formula represents a bond.

4. The composition according to any one of Claims 1 to 3, comprising:
a first compound C having MFR (X)/MFR (B) of 0.8 or less; and
a second compound C having MFR (X)/MFR (B) of more than 0.8 and 1.0 or less.

5. The composition according to any one of Claims 1 to 4, wherein the polymer B accounts for more than 50 mass%.

6. The composition according to any one of Claims 1 to 5, wherein the polymer B is a poly(3-hydroxyalkanoate)-based polymer having a melting point of 150°C or higher.

7. The composition according to any one of Claims 1 to 6, wherein a molecular weight of the compound C is 5000 or less.

8. A composition comprising:
a polyolefin-based polymer A;
a polymer B; and
a compound C, wherein
the polymer B is an aliphatic polyester-based polymer,
a content of the compound C is 0.01 to 20 parts by mass with respect to 100 parts by mass of a total of the polymer A, the polymer B, and the compound C, and
the compound C satisfies the following requirement 1:
requirement 1: when a melt mass flow rate of the polymer B as measured under conditions of a temperature of 210°C and a load of 2.16 kgf is designated as MFR (B), and
a melt mass flow rate of a mixture X containing 0.5 parts by mass of the compound C with respect to 100 parts by mass of the total of the polymer B and the compound C as measured under conditions of a temperature of 210°C and a load of 2.16 kgf is designated as MFR (X), MFR (X)/MFR (B) is 2.0 or less.

9. The composition according to Claim 8, wherein MFR (X)/MFR (B) in the requirement 1 is 0.8 or less.

10. The composition according to Claim 8 or 9, wherein the compound C is selected from compounds represented by formula (C1):
Ph¹-X-(Ph²)ₐ ... (C1)
provided that, a is 1 or 2, and Ph¹ is represented by formula (C2), 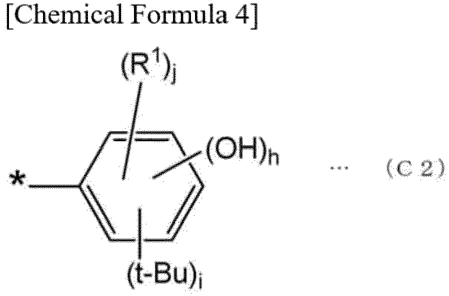
where R¹ is independently selected from the group consisting of an alkyl group having 1 to 5 carbon atoms except a t-Bu group, h is an integer of 1 to 3, i is an integer of 1 to 3, j is an integer of 0 to 3, h + i + j is 5 or less, one or more t-Bu groups are necessarily present at an ortho position of at least one OH group,
Ph² is represented by formula (C3), 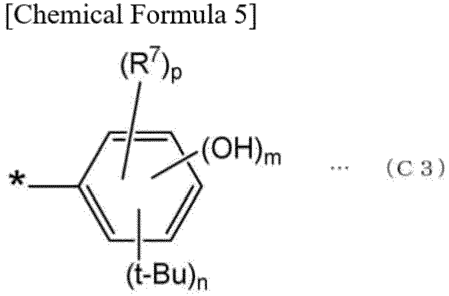
where m is an integer of 0 to 3, n is an integer of 0 to 3, p is an integer of 0 to 3, m + n + p is 5 or less, R⁷ is independently selected from the group consisting of an alkyl group having 1 to 5 carbon atoms except a t-Bu group,
X is selected from the group consisting of -O-C(=O)-, -(O=)C-O-, -C(R⁸)₂-, -S-, -O-, a divalent or trivalent aromatic hydrocarbon group in which the number of carbons constituting a ring is 6 to 14, and 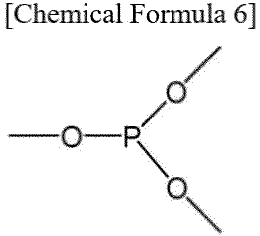
where R⁸ is independently selected from the group consisting of a hydrogen atom and an alkyl group having 1 to 5 carbon atoms, and
* in the structural formula represents a bond.

11. The composition according to any one of Claims 8 to 10, comprising:
a first compound C having MFR (X)/MFR (B) of 0.8 or less; and
a second compound C having MFR (X)/MFR (B) of more than 0.8 and 1.0 or less.

12. The composition according to any one of Claims 8 to 11, wherein when a total of the polyolefin-based polymer A and the polymer B is taken as 100 parts by mass, the composition contains more than 50 parts by mass of the olefin-based polymer A.

13. The composition according to any one of Claims 8 to 12, wherein the polymer B is a poly(3-hydroxyalkanoate)-based polymer having a melting point of 150°C or higher.

14. The composition according to any one of Claims 8 to 13, wherein a molecular weight of the compound C is 5000 or less.
